# EUROPÄISCHE PATENTSCHRIFT

(11) **EP 2 882 613 B1**
(45) Veröffentlichungstag und Bekanntmachung des Hinweises auf die Patenterteilung: **09.05.2018**
(21) Anmeldenummer: 13795687.6
(22) Anmeldetag: 02.08.2013
(51) Int. Cl.: B60R 3/00, B62D 33/06

(54) **NUTZFAHRZEUG MIT EINER EINSTIEGSTREPPE**
UTILITY VEHICLE WITH ENTRY STEPS
VÉHICULE UTILITAIRE ÉQUIPÉ D'UN ESCALIER D'ACCÈS

(30) Priorität: 10.08.2012 DE 102012015889
(43) Veröffentlichungstag der Anmeldung: 17.06.2015
(73) Patentinhaber: BOMAG GmbH, 56154 Boppard (DE)
(72) Erfinder: KLEIN, Thomas, 56653 Wehr (DE); KREUTZ, Tobias, 55566 Ippenschied (DE)
(74) Vertreter: Lang, Friedrich
(86) Internationale Anmeldenummer: PCT/EP2013/003337
(87) Internationale Veröffentlichungsnummer: WO 2014/023434

(56) Entgegenhaltungen:
- EP-A1- 1 046 748
- US-A- 5 788 321
- US-A1- 2008 129 079
- US-A1- 2008 231 079

## Beschreibung

Die Erfindung betrifft eine Straßenwalze mit einer Fahrerkabine und einer Einstiegstreppe unterhalb einer Fahrerkabinentür sowie einer Seitenverkleidung, welche im Bereich der Einstiegstreppe eine Außenfläche bildet.

Ein Nutzfahrzeug ist aus DE 102004047546 A1 bekannt. Die Seitenverkleidung dieses Fahrzeugs bildet im Wesentlichen eine geschlossene Außenfläche, in welche unterhalb des Einstiegs in die Fahrerkabine eine Einstiegstreppe angeordnet ist. Ihre Trittstufen sind nach oben treppenartig abgestuft, d.h. nach unten hin sind die Außenkanten der Trittstufen nach vorne versetzt. Als nachteilig kann angesehen werden, dass die Trittstufen relativ weit nach außen über die Außenlinie des Fahrzeugs vorstehen, so dass sie hochgeklappt werden müssen, wenn ein bündiger Abschluss mit der Außenkontur des Fahrzeug erhalten werden soll.

Ferner ist aus DE 102010026255 A1 bei einem Aufstieg eines Fahrerhauses eines Lastkraftwagens bekannt, die Stufentiefe von übereinander angeordneten Trittstufen von oben nach unten zu vergrößern. Dieses Konzept für sich ist auch schon bei Straßenwalzen eingesetzt worden, wie beispielsweise aus der EP 1 046 748 A1 hervorgeht. Aus US 2522674 A ist ferner eine ausklappbare Einund Ausstiegstreppe für einen Passagierwaggon eines Zuges bekannt. Die Treppe ist mit einem Teil der Außenwand des Waggons einstückig in der Weise ausgebildet, dass die betreffende Außenwand beim Ausklappen der Treppe unterhalb der Treppe verschwindet und die Treppe zum größten Teil in einer Nische innerhalb der Außenkontur des Waggons zu liegen kommt.

Die EP1046748 A1 zeigt eine Straßenwalze mit einer Fahrerkabine und einer mehrere Trittstufen aufweisenden Einstiegstreppe. Die US2008231079 A1 zeigt ein Nutzfahrzeug mit einer Fahrerkabine und einer mehrere Trittstufen aufweisenden Einstiegstreppe unterhalb einer Fahrerkabinentür sowie einer Seitenverkleidung, welche im Bereich der Einstiegstreppe eine geschlossene Außenfläche bildet.

Der Erfindung liegt die Aufgabe zu Grunde, eine Straßenwalze der eingangs angegebenen Art anzugeben, bei welchem die Einstiegstreppe möglichst wenig über die Außenlinie des Fahrzeugs übersteht.

Diese Aufgabe wird dadurch gelöst, dass die Außenfläche unterhalb der Fahrerkabine einen sich nach unten vergrößernden Versatz zur Straßenwalze hin aufweist, und dass die Außenkanten der Trittstufen aus der Außenfläche in der Weise hervorstehen, dass die unterste Trittstufe am weitesten aus der Außenfläche hervorsteht.

Die Erfindung hat den Vorteil, dass auf Grund der geneigten Kontur der Außenfläche die jeweils unten liegenden Trittstuffen vom Benutzer beim Ein- und Aussteigen gut einsehbar sind, so dass das Betreten der Trittstufen einfacher und sicherer wird. Außerdem kann der Benutzer den unterhalb der Einstiegstreppe liegenden Bereich des Untergrunds besser einsehen, was auch hier die Trittsicherheit verbessert. Ferner ermöglicht der sich vergrößernde Versatz, dass das Sichtfeld von der Fahrerkabine auf den Untergrund im Randbereich des Fahrzeugs verbessert wird. Ein Hochklappen der Trittstufen ist nicht erforderlich, da die Trittstufen im Wesentlichen innerhalb der Außenlinie der Straßenwalze liegen.

Eine bevorzugte Weiterbildung der Erfindung besteht darin, dass die oberste Trittstufe über eine Oberkante der Außenfläche hervorsteht, die sich im Bereich einer Plattform der Fahrerkabine befindet. Auf diese Weise ist bereits die oberste Trittstufe beim Betreten der Einstiegstreppe leicht einsehbar.

Zur weiteren Verbesserung des Sichtfeldes ist es zweckmäßig, dass die Außenfläche den Versatz über die gesamte Breite der Fahrerkabine zum Fahrzeuginneren hin aufweist.

Es erweist sich ferner zur Verbesserung des Sichtfeldes als vorteilhaft, dass die Seitenverkleidung an der der vorderen Bandage zugewandten Seite der Außenfläche mit einer nach innen weisenden Abschrägung versehen ist, durch welche ein gutes Blickfeld auf den Untergrund hinter dem Randbereich der vorderen Bandage ermöglicht wird. Der Fahrzeugführer hat dadurch beim Ein- und Ausstieg den Untergrund hinter dem Randbereich der vorderen Bandage und neben der Einstiegstreppe gut im Blick.

Die nach unten verlaufenden Aufweitungen der schmalen Seitenflächen können bis in den Bereich der vorderen und hinteren Bandage geführt werden. Das hat den Vorteil, dass der Bediener von der Fahrerkabine aus freie Sicht auf die Außenkanten der beiden Bandagen hat, und eine genaue Steuerung der Straßenwalze erleichtert wird.

Nachfolgend wird die Erfindung anhand eines in der Zeichnung dargestellten Ausführungsbeispiels weiter erläutert. Es zeigen schematisch:
- Fig. 1: eine perspektivische Ansicht auf eine Straßenwalze;
- Fig. 2: eine Teilansicht eines Vorderwagens der Straßenwalze gemäß Fig. 1; und
- Fig. 3: eine Draufsicht auf ein Detail der Straßenwalze von Fig. 2 gemäß Pfeil Z.

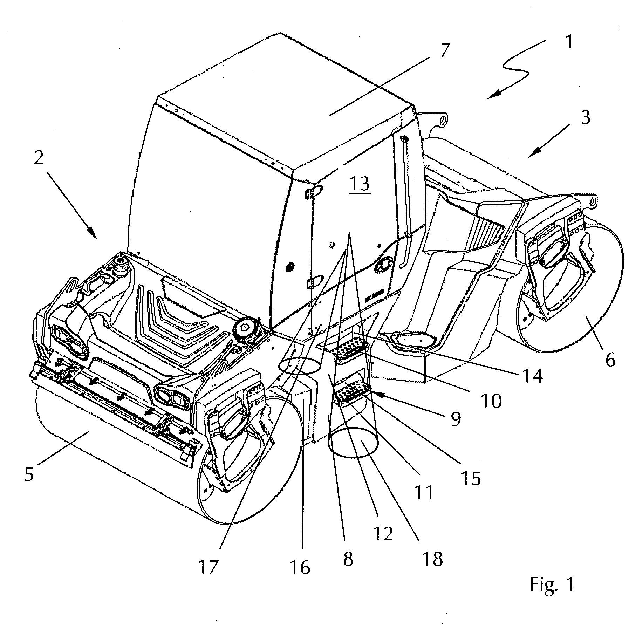

Fig. 1 veranschaulicht ein Nutzfahrzeug, das als selbstfahrende Baumaschine in Form einer Straßenwalze 1 zum Verkehrswegebau ausgebildet ist. Es weist einen Vorderwagen 2 und einen Hinterwagen 3 auf, die über ein Pendel-/Knickgelenk (nicht dargestellt) miteinander verbunden sind. Am Vorderwagen 2 ist eine vordere Bandage 5 und am Hinterwagen 3 eine hintere Bandage 6 angeordnet. Die Straßenwalze 1 ist ferner mit einer Fahrerkabine 7 versehen.

Ein Bereich unterhalb der Fahrerkabine 7 ist mit einer ortsfest angeordneten Seitenverkleidung 8 aus Kunststoff oder Blech versehen. Dieser Bereich kann zum Beispiel Tanks, Antriebsmittel u.ä. aufnehmen. An einer Einstiegsseite der Fahrerkabine 7 befindet sich eine ortsfeste Einstiegstreppe 9. Sie befindet sich im Bereich einer seitlichen Außenfläche 12 der Seitenverkleidung 8. Die Außenfläche 12 befindet sich unmittelbar unterhalb einer Tür 13 der Fahrerkabine 7 und bildet ein Seitenteil der Seitenverkleidung 8. Die Außenfläche 12 bildet in dem dargestellten Ausführungsbeispiel im Wesentlichen eine plane Fläche. In der Figur 1 ist die linke Seite der Straßenwalze 1 veranschaulicht. Die rechte Seite kann in der gleichen Weise ausgebildet sein. Die nachfolgende Beschreibung bezieht sich auf die dargestellte linke Seite der Straßenwalze 1. Sie trifft gegebenenfalls auch auf die rechte Seite zu.

In dem dargestellten Beispiel weist die Einstiegstreppe 9 eine als obere Trittplatte 10 ausgebildete obere Trittstufe und eine als untere Trittplatte 11 ausgebildete untere Trittstufe auf. Die Trittplatten 10, 11 sind teilweise in einer ersten bzw. zweiten Vertiefung 14, 15 angeordnet, die in der Außenfläche 12 ausgebildet sind, und teilweise stehen sie aus den Vertiefungen 14, 15 heraus.

An der der vorderen Bandage 5 zugewandten Seite der Seitenverkleidung 8 ist im Anschluss an die Seitenverkleidung 8 eine nach vorn und nach innen verlaufende Abschrägung 16 der Seitenverkleidung 8 vorhanden. Durch die Abschrägung 16 wird ein sich im Wesentlichen keilförmig erweiternder Freiraum vor dem Randbereich der vorderen Bandage 5 gebildet. Dadurch wird ein sich erweiterndes gutes Blickfeld auf den Randbereich der vorderen Bandage 5 und auf den Untergrund hinter dem Randbereich der vorderen Bandage 5 ermöglicht, insbesondere beim Benützen der Einstiegstreppe 9 und von der Fahrerkabine 7 aus. Das Blickfeld ist rein schematisch als Sichtkegel 17 von der Fahrerkabine 7 aus dargestellt.

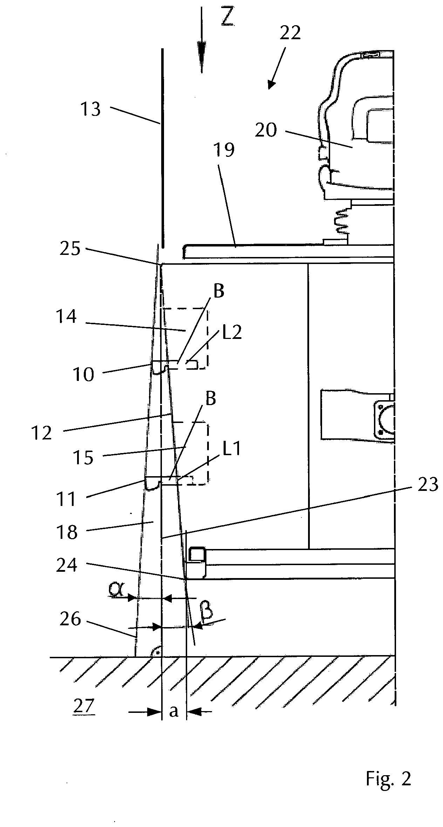

Ein weiterer Sichtkegel 18 veranschaulicht beispielhaft das Sichtfeld von der Fahrerkabine 7 aus auf den Bereich unterhalb der Fahrerkabine 7 und insbesondere den Bereich des Untergrunds unmittelbar neben und unterhalb der Einstiegstreppe 9, was im Zusammenhang mit Fig. 2 weiter beschrieben wird.

Die Teilansicht des Vorderwagens 2 gemäß Fig. 2 zeigt eine Hälfte des Vorderwagens 2 vom Pendel-/Knickgelenk aus gesehen in Richtung auf die vordere Bandage 5. Die Fahrerkabine 7 ist in der Darstellung entfernt, so dass eine Plattform 19 mit einem Fahrersitz 20 eines Fahrerstandes 22 ersichtlich ist, die sich an sich im Inneren der Fahrerkabine 7 befinden. Eine Tür 13 der Fahrerkabine 7 ist lediglich als vertikale Linie dargestellt.

Aus Fig. 2 wird die Außenkontur der Außenfläche 12 der Seitenverkleidung 8 ersichtlich. Die Außenfläche 12 ist unter einem ersten Winkel ß > 0° gegenüber der Vertikalen 23 in der Weise geneigt, dass sie einen sich von oben nach unten vergrößernden Versatz zur Straßenwalze 1 hin aufweist. Dieser Versatz erstreckt sich über die gesamte Länge und Breite der Außenfläche 12. Das heißt mit anderen Worten, die Seitenverkleidung 8 tritt in dem Bereich unterhalb der Fahrerkabine 7 von oben nach unten kontinuierlich zurück. Dadurch ist die Unterkante 24 der Außenfläche 12 bzw. der Seitenverkleidung 8 gegenüber ihrer Oberkante 25, die sich etwas unterhalb der Tür 13 befindet und bündig mit ihr abschließt, um einen Abstand a zurückgesetzt. Durch den sich erweiternden Versatz ist es möglich, unterhalb der Seitenverkleidung 8 einen Bereich des Untergrunds 27 von der Plattform 19 bzw. der Fahrerkabine 7 aus einzusehen, der ohne diesen Versatz nicht einzusehen wäre.

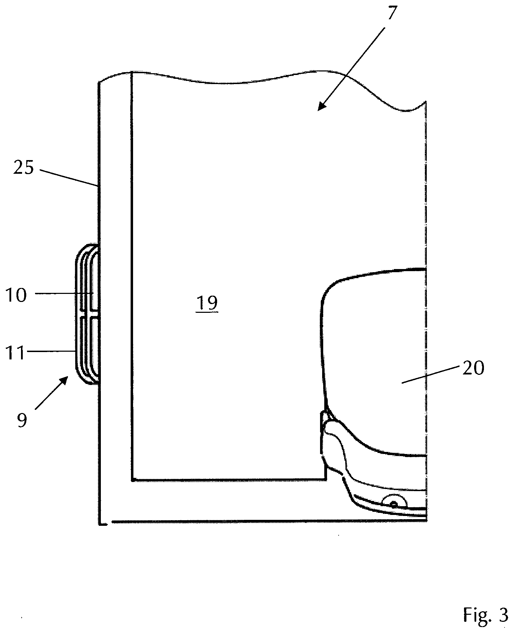

Die Außenränder der Trittplatten 10, 11 sind bei gleicher Breite B der Trittplatten 10, 11 treppenartig abgestuft, d.h. die Trittplatte einer jeweils unten liegenden Trittstufe, hier die untere Trittplatte 11, ist gegenüber der Trittplatte einer darüber liegenden Trittstufe, hier der oberen Trittplatte 10, etwas nach außen versetzt. Auf diese Weise liegen die Außenränder der Trittplatten 10, 11 auf einer Linie 26, die unter einem zweiten Winkel α > 0° zur Vertikalen 23 geneigt ist, so dass sich der Versatz der Trittplatten 10, 11 von oben nach unten vergrößert. Dieser Versatz ist auch in Fig. 3 ersichtlich. Die unterste Trittplatte 11 steht dadurch am weitesten aus der Außenfläche hervor und die oberste Trittplatte 11 am wenigsten. Umgekehrt kommt die unterste Trittplatte 11 mit einem kleineren Abschnitt L1 in der zugehörigen Vertiefung 15 zu liegen als die oberste Trittplatte 11, die mit einem größeren Abschnitt L2 in der zugehörigen Vertiefung 14 zu liegen kommt. Durch den gegenläufigen Versatz der Außenfläche 12 haben die Außenkanten der Trittplatten 10, 11 relativ wenig Überstand gegenüber der Oberkante 25 der Außenfläche 12 und damit gegenüber der Außenkontur der Straßenwalze 1, welche im Wesentlichen durch die Oberkante 25 und die damit bündig abschließende Fahrerkabine 7 bestimmt ist.

Dadurch, dass die Trittplatten 10, 11 mit zunehmendem Abstand von der Tür 13 weiter nach außen versetzt sind, während die Außenfläche 12 der Seitenverkleidung 8 in die entgegengesetzte Richtung nach innen versetzt ist, stehen die Trittplatten 10, 11 mit zunehmendem Abstand von der Tür 13 mit einem größeren Überstand über Außenfläche 12 vor. Das bedeutet, der Sichtbereich von der Fahrerkabine 7 aus auf die Trittplatten 10, 11 verbreitert sich nach unten. Die Trittplatten 10, 11 können somit beim Ein- und Ausstieg in die/ aus der Fahrerkabine 7 umso besser vom Benutzer eingesehen werden, je weiter unten sie angeordnet sind.

Der oben beschriebene Effekt wird auch erreicht, wenn die Außenränder der Trittplatten 10, 11 auf die Vertikale 23 ausgerichtet sind (Winkel α = 0°), und somit keinen Überstand über die Oberkante 25 der Außenfläche 12 haben. Ebenso wird dieser Effekt erreicht, wenn die Außenfläche nicht plan ist, sondern beispielsweise abgestuft oder gewölbt ist.

## Patentansprüche

1. Straßenwalze mit einer Fahrerkabine (7) und einer mehrere Trittstufen aufweisenden Einstiegstreppe (9) unterhalb einer Fahrerkabinentür (13) sowie einer Seitenverkleidung (8), welche im Bereich der Einstiegstreppe (9) eine geschlossene Außenfläche (12) bildet,
**dadurch gekennzeichnet,**
**dass** die Außenfläche (12) unterhalb der Fahrerkabine (7) gegenüber der Vertikalen (23) einen sich nach unten vergrößernden Versatz zur Straßenwalze hin aufweist, und dass die Außenkanten der Trittstufen aus der Außenfläche (12) unter Bildung einer treppenartigen Abstufung in der Weise hervorstehen, dass die unterste Trittstufe am weitesten aus der Außenfläche (12) hervorsteht.

2. Straßenwalze (1) nach Anspruch 1,
**dadurch gekennzeichnet,**
**dass** die oberste Trittstufe über eine Oberkante (25) der Außenfläche (12) hervorsteht, die sich im Bereich einer Tür (13) der Fahrerkabine (7) befindet.

3. Straßenwalze (1) nach einem der vorhergehenden Ansprüche,
**dadurch gekennzeichnet,**
**dass** die Außenfläche (12) den Versatz über die gesamte Breite der Fahrerkabine (7) zum Fahrzeuginneren hin aufweist.

4. Straßenwalze (1) nach einem der vorhergehenden Ansprüche,
**dadurch gekennzeichnet,**
**dass** die Seitenverkleidung (8) an der der vorderen Bandage (5) zugewandten Seite der Außenfläche (12) mit einer nach innen weisenden Abschrägung (16) versehen ist, durch welche ein gutes Blickfeld auf den Untergrund zwischen der vorderen Bandage (5) und der Einstiegstreppe (9) beim Benützen der Einstiegstreppe (9) ermöglicht wird.

## Claims

1. Road roller with a driver's cabin (7) and a set of access steps (9) comprising a number of steps below a door (13) of the driver's cabin, as well as a lateral housing (8), which forms a closed outer surface (12) in the area of the access steps (9),
**characterized in that**
the outer surface (12) below the driver's cabin (7) comprises an offset that increases downward towards the road roller in relation to the vertical plane (23), and that the outer edges of the steps protrude from the outer surface (12) and form a step-like gradation in such a way that the lowest step protrudes the furthest from the outer surface (12).

2. Road roller (1) according to claim 1,
**characterized in that**
the uppermost step protrudes beyond an upper edge (25) of the outer surface (12), which is located in the area of a door (13) of the driver's cabin (7).

3. Road roller (1) according to one of the preceding claims,
**characterized in that**
the outer surface (12) comprises the offset over the entire width of the driver's cabin (7) toward the interior of the vehicle.

4. Road roller (1) according to one of the preceding claims,
**characterized in that** the lateral housing (8) on the outer surface (12) facing the front drum (5) is provided with an inward-oriented inclination (16), through which a good view of the ground between the front drum (5) and the access steps (9) is rendered possible when the access steps (9) are used.

## Revendications

1. Rouleau compresseur avec une cabine conducteur (7) et un marchepied (9) comprenant plusieurs marches situé au-dessous d'une porte (13) de la cabine conducteur, ainsi qu'un revêtement latéral (8) qui forme une surface extérieure fermée (12) dans la zone du marchepied (9),
***caractérisé en ce que***
la surface extérieure (12) située au-dessous de la cabine conducteur (7) présente un décalage par rapport à la verticale (23), qui augmente vers le bas en direction du rouleau compresseur, et ***en ce que*** les bords extérieurs des marches dépassent de la surface extérieure (12) et forment une gradation en escalier d'une manière telle que la marche la plus basse dépasse le plus de la surface extérieure (12).

2. Rouleau compresseur selon la revendication 1,
***caractérisé en ce que***
la marche la plus haute dépasse d'un bord supérieur (25) de la surface extérieure (12) qui est situé dans la zone d'une porte (13) de la cabine conducteur (7).

3. Rouleau compresseur selon l'une quelconque des revendications précédentes,
***caractérisé en ce que***
la surface extérieure (12) présente le décalage sur toute la largeur de la cabine conducteur (7) vers l'intérieur du véhicule.

4. Rouleau compresseur selon l'une quelconque des revendications précédentes,
***caractérisé en ce que***
le revêtement latéral (8) sur la surface extérieure (12) faisant face au cylindre avant (5) présente une inclinaison (16) orientée vers l'intérieur, grâce à laquelle une bonne vue du sol entre le cylindre avant (5) et le marchepied (9) est rendue possible lorsque les marches (9) sont utilisées.
